# EUROPEAN PATENT APPLICATION

(11) **EP 3 160 040 A1**
(43) Date of publication of application: **26.04.2017**
(21) Application number: 16151190.2
(22) Date of filing: 14.01.2016
(51) Int. Cl.: H02S 40/34

(54) **INTEGRATED APPARATUS WITH MULTIPLE SOLAR PANEL MODULES**

(30) Priority: 22.10.2015 TW 104216959
(71) Applicant: Eterbright Solar Corporation, Toufen City, Miaoli County (TW)
(72) Inventor: HUANG, TING-HUI, 35154 Miaoli County (TW)
(74) Representative: Straus, Alexander

(57) **Abstract**

An integrated apparatus (5000) with multiple solar panel modules has a plurality of solar panel modules (1001, 1002, 100n) electrically connected with each other. Each solar panel module (1001, 1002, 100n) has at least one solar panel (100). The at least one solar panel (100) has a plurality of solar cell units (10, 10a, 10b) electrically connected with each other. There is only single one bypass diode (BD) provided in the integrated apparatus (5000).

## Description

### FIELD OF THE DISCLOSURE

The present invention is related to an integrated apparatus, especially an integrated apparatus with multiple solar panel modules.

### BACKGROUND OF THE INVENTION

Generally, in order to generate more power, a solar panel comprises more than one solar cell unit and a solar panel apparatus capable of generating enough power requires multiple solar panels. Since sun light may shine on solar panels with different incident angles according to different time and may sometimes be blocked, all the solar cell units within the same solar panel apparatus may not get sun light uniformly and equally. In the case where solar cell units don't get sun light uniformly and equally for a while, the solar cell units getting less sun light may become reverse biased while the solar cell units getting sun light normally may become forward biased. This difference between reverse biased and forward biased could lead to overheating of the reverse biased solar cell units or even crashing of the entire solar panel apparatus. To address this problem, many bypass diodes are used in a solar panel apparatus. Depending on breakdown voltages, normally several solar cell units or several tens of solar cell units share a bypass diode. However, bypass diodes are not chip.

Therefore, the industry needs a low-cost and reliable solution to address this problem.

### SUMMARY OF THE INVENTION

One purpose of the present invention is to provide an integrated apparatus capable of generating enough power and providing reliable performance and capable of being fabricated and assembled with lower cost. The integrated apparatus with multiple solar panel modules has a plurality of solar panel modules electrically connected with each other. Each solar panel module has at least one solar panel. The at least one solar panel has a plurality of solar cell units electrically connected with each other. There is only single one bypass diode provided in the integrated apparatus.

According to one embodiment of the present invention, the plurality of solar cell units are electrically connected in serial. Each of the plurality of solar panel modules comprises a plurality of solar panels electrically connected in parallel. The plurality of solar panel modules are electrically connected in serial or in parallel.

According to one embodiment of the present invention, the plurality of solar panel modules comprises a first solar panel module and rest of the solar panel modules, wherein there are no bypass diodes provided in the rest of the solar panel modules.

According to one embodiment of the present invention, the first solar panel module comprises two junction boxes and the only single one bypass diode is provided in one junction box of the two junction boxes. The one junction box accommodating the only single one bypass diode is provided on a front side configured to subject to sun light or on a backside configured to be away from sun light.

According to one embodiment of the present invention, each solar panel module of the plurality of solar panel modules comprises three solar panels.

### BRIEF DESCRIPTION OF THE DRAWINGS

FIG. 1 shows a solar panel according to one embodiment of the present invention.
FIG. 2 shows a top view of a backside of a solar panel module according to one embodiment of the present invention.
FIG. 3 shows a top view of a backside of a solar panel module according to another embodiment of the present invention.
FIG. 4 shows an integrated apparatus according to one embodiment of the present invention.

### DESCRIPTION OF THE PREFERRED EMBODIMENTS

The following descriptions illustrate preferred embodiments of the present invention in detail. All the components, sub-portions, structures, materials and arrangements therein can be arbitrarily combined in any sequence despite their belonging to different embodiments and having different sequence originally. All these combinations are falling into the scope of the present invention.

There are a lot of embodiments and figures within this application. To avoid confusions, similar components are designated by the same or similar numbers. To simplify figures, repetitive components are only marked once.

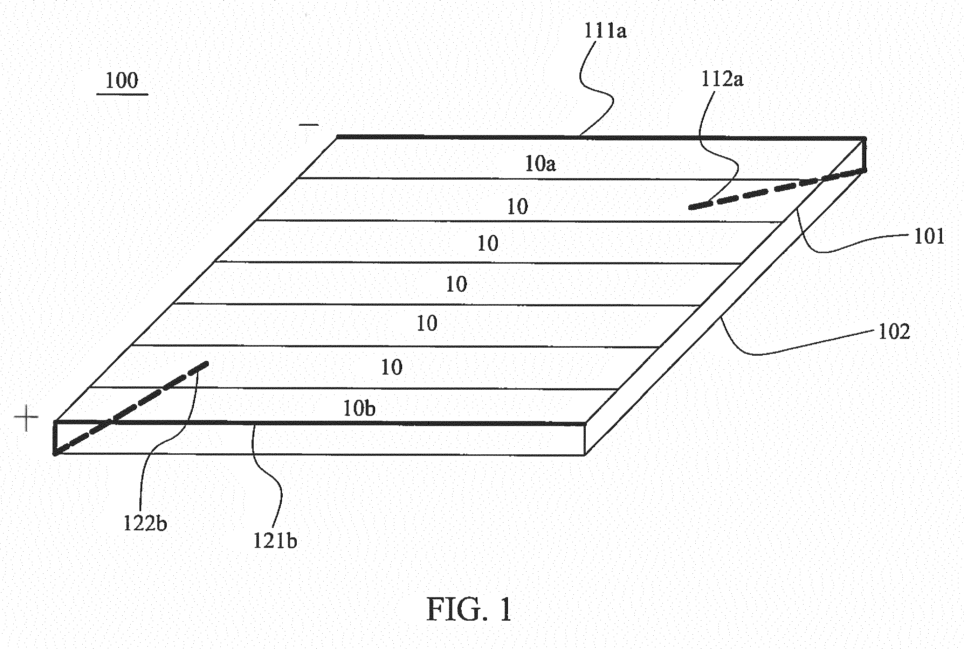

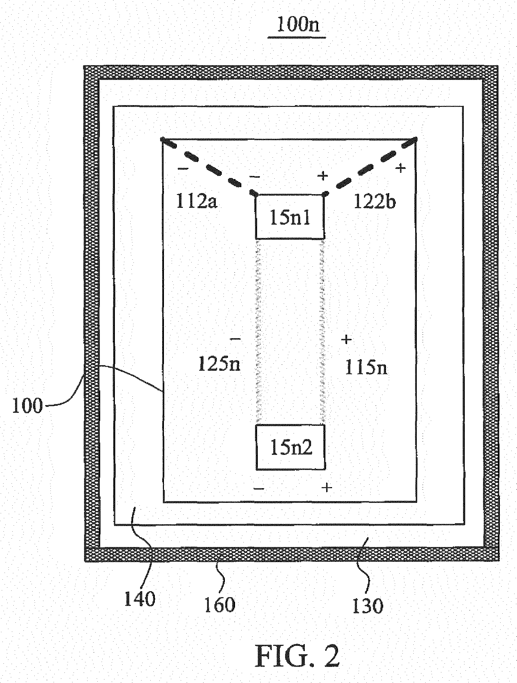

Now please refer to FIG. 1. FIG.1 shows a solar panel 100 according to one embodiment of the present invention. The solar panel 100 comprises a front side 101 configured to subject to sun light and a backside 102 configured to be away from sun light. The solar panel 100 comprises a plurality of solar cell units 10a, 10b and 10 electrically connected in serial. Solar cell units 10a and 10b represent solar cell units at two ends of the solar panel 100 while solar cell unit 10 represents one of the solar cell units between the solar cell units 10a and 10b. The solar panel 100 preferably has a rectangle shape with two long edges and two short edges. A front side positive ribbon 121 b and a front side negative ribbon 111a are disposed at two long sides opposite to each other of the front side 101 of the solar panel 100 and are folded to the backside 102 of solar panel 100 to become a backside positive ribbon 122b and a backside negative ribbon 112a respectively. In most of the figures of the present invention, the backside positive ribbon 122b and the backside negative ribbon 112a are shown by dashed lines to be different from the front side positive ribbon 121b and the front side negative ribbon 111a shown by solid lines. The front side positive ribbon 121b and the front side negative ribbon 111a are used as a positive electrode and a negative electrode of the solar panel 100 respectively. The front side positive ribbon 121 b and the front side negative ribbon 111a may be folded to the backside 102 from the same short edge of the solar panel 100 as shown in FIG. 2 or folded to the backside 102 from different short edges of the solar panel 100 as shown in FIG. 1. The ribbons for example can be made from copper foil, copper ribbon, foils of other metals or alloy or ribbons of other metals or alloys.

Although not shown in FIG. 1, each solar panel of the present invention such as the solar panel 100 has a stacked structure from bottom to top comprising a back glass, a patterned lower electrode layer, a patterned photoelectric conversion layer, an optional patterned buffer layer and a patterned transparent upper electrode layer. The patterned lower electrode layer and the patterned transparent upper electrode layer are configured to conduct electrical current generated by the patterned photoelectric conversion layer. The patterned photoelectric conversion layer is configured to receive light penetrating the patterned transparent upper electrode layer and the optional patterned buffer layer and to convert the light into electricity. The photoelectric conversion layer may be formed from a semiconductor material composed of copper (Cu), indium (In), gallium (Ga) and selenium (Se). Alternatively, the photoelectric conversion layer may be formed from a semiconductor compound material comprising Ib group element such as copper (Cu) or silver (Ag), IIIb group element such as aluminum (Al), gallium (Ga) or indium (In) and VIb group element such as sulfur (S), selenium (Se) or tellurium (Te). The transparent upper electrode layer may use indium tin oxide (ITO) and/or zinc oxide (ZnO). The lower electrode layer may use molybdenum (Mo).

Now please refer to FIG. 2. FIG. 2 shows a top view of the backside of a solar panel module 100n according to one embodiment of the present invention. The solar panel module 100n comprises only one solar panel 100, a back sheet 130 with a size slightly larger than a size of the solar panel 100 disposed on the backside 102 of the solar panel 100, a cover panel 140 with a size equivalent to or slightly smaller than the size of the back sheet 130 disposed on the front side 101 of the solar panel 100, and a frame 160 configured to engage with a periphery region of the back sheet 130 and a periphery region of the cover panel 140. The cover panel 140 for example is a rigid glass panel. The back sheet 130 for example is a rigid back sheet or a flexible back sheet. Rigid back sheet may be a tempered glass, a chemically strengthened glass or a polymeric resin sheet. Flexible back sheet may be a high-tensile plastic sheet such as polyethylene (PE) sheet, polyamide (PA) sheet, polyethylene terephthalate (PET) sheet or a combination thereof. The back sheet 130 may also be a combination of a material listed above and a metallic foil attached thereto. The frame 160 may be composed of several sub-portions attached to the cover panel 140 and/or the back sheet 130 by adhesives or sealants. Additionally, the solar panel module 100n further comprises the backside positive ribbon 122b and the backside negative ribbon 112a formed by folding the front side positive ribbon and the front side negative ribbon to the backside 102 respectively, a positive connecting ribbon 115n and a negative connecting ribbon 125n, and a first connecting junction box 15n1 and a second connecting junction box 15n2. The first connecting junction box 15n1 is disposed near a short edge to electrically connect the backside positive ribbon 122b and the backside negative ribbon 112a. The second connecting junction box 15n2 is disposed near the other short edge to electrically connect to the first connecting junction box 15n1 through the positive connecting ribbon 115n and the negative connecting ribbon 125n. The first connecting junction box may be electrically connected to an external device such as an electricity storage device or consumer electronics while the second connecting junction box may be electrically connected to the next solar panel module.

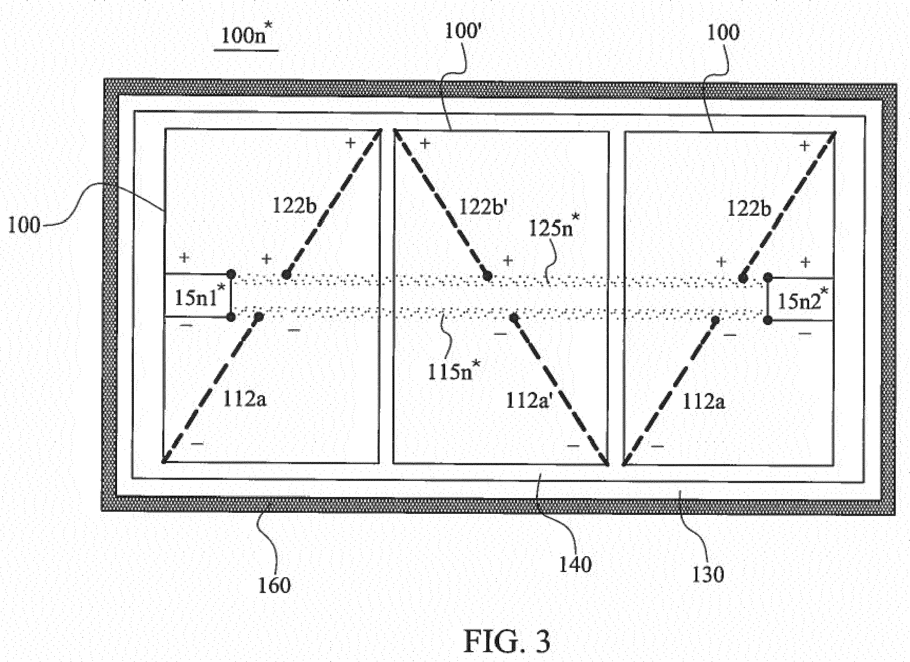

Now please refer to FIG. 3. FIG. 3 shows a top view of the backside of a solar panel module 100n* according to another embodiment of the present invention. The solar panel 100n* comprises three solar panels (100, 100' and 100), a back sheet 130 with a size slightly larger than a size of one solar panel of the solar panels disposed on the backside 102 of the solar panel, a cover panel 140 with a size equivalent to or slightly smaller than the size of the back sheet 130 disposed on the front side 101 of the solar panel, and a frame 160 configured to engage with a periphery region of the cover panel 140 and/or a periphery region of the back sheet 130. The solar panels 100 and 100' are substantially the same in view of their structures except the relative positions of ribbons. The cover panel 140, the back sheet 130, and the frame 160 are similar to the ones disclosed in FIG. 2 and their details are omitted here. Additionally, the solar panel module 100n* further comprises the backside positive ribbon 122b and the backside negative ribbon 112a formed by folding the front side positive ribbon and the front side negative ribbon to the backside 102 of the solar panel 100 respectively, the backside positive ribbon 122b' and the backside negative ribbon 112a' formed by folding the front side positive ribbon and the front side negative ribbon to the backside 102 of the solar panel 100' respectively, a positive connecting ribbon 115n* and a negative connecting ribbon 125n*, and a first connecting junction box 15n1* and a second connecting junction box 15n2*. The first connecting junction box 15n1* is disposed at the first (most left) solar panel 100 while the second connecting junction box 15n2* is disposed at the last (most right) solar panel 100. The positive connecting ribbon 115n* and the negative connecting ribbon 125n* are disposed between the first connecting junction box 15n1* and the second connecting junction box 15n2* across all the solar panels 100 and 100'. The positive connecting ribbon 115n* electrically connects the positive terminal of the first connecting junction box 15n1*, all the backside positive ribbons 122b/122b' of all the solar panels 100/100', and the positive terminal of the second connecting junction box 15n2*. The negative connecting ribbon 125n* electrically connects the negative terminal of the first connecting junction box 15n1*, all the backside negative ribbons 112a/112a' of all the solar panels 100/100', and the negative terminal of the second connecting junction box 15n2*. Similarly, one of the junction boxes 15n1* and 15n2* may be electrically connected to an external device such as an electricity storage device or consumer electronics while the other one of the junction boxes 15n1* and 15n2* may be electrically connected to the next solar panel module.

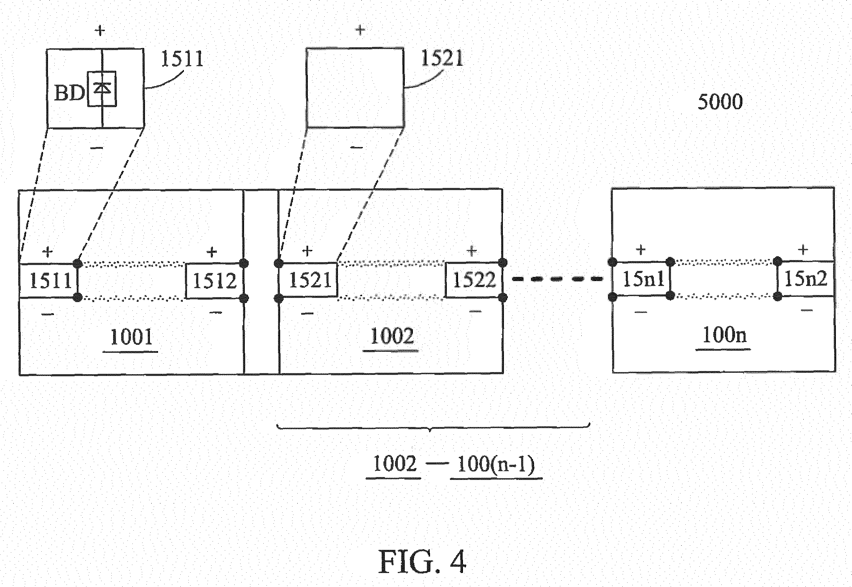

Now please refer to FIG. 4. FIG. 4 shows an integrated apparatus 5000 according to one embodiment of the present invention. The integrated apparatus 5000 comprises a plurality of solar panel modules 1001-100n electrically connected, wherein n is an integer equivalent to or greater than 2. Each of the solar panel modules 1001-100n may be the solar panel module 100n comprising at least one solar panel as shown in FIG. 2, be the solar panel module 100n* comprising a plurality of solar panels electrically connected in parallel as shown in FIG. 3, or a panel module comprising solar panels arranged differently. Each solar panel preferably comprises a plurality of solar cell units especially a plurality of solar cell units electrically connected in serial as shown in FIG. 1. Within the integrated solar panel apparatus each solar panel module may comprise two junction boxes electrically connected by connecting ribbons as shown in FIG. 2 or 3, and different solar panel modules may be electrically connected in parallel as shown in FIG. 4 or electrically connected in serial. The plurality of solar panel modules 1001-100n of the integrated apparatus 5000 may be divided into a first solar panel module 1001 and rest of the solar panel modules 1002-100n. There is only single one bypass diode provided in the entire integrated apparatus 5000. The single one bypass diode such as the bypass diode BD is disposed in the first solar panel module 1001 for example in one of a first junction box 1511 and a second junction box 1512 of the first solar panel module 1001. That is, there is no bypass diode disposed in the other one of the first junction box 1511 and the second junction box 1512 of the first solar panel module 1001 and there are no bypass diodes disposed in the rest of the solar panel modules 1002-100n. Therefore, there are no bypass diodes disposed in a first junction box 1521 and a second junction box 1522 of a second solar panel module 1002...a first junction box 15n1 and a second junction box 15n2 of a n^{th} solar panel module 100n.

Although in the embodiments each solar panel module comprises two junction boxes, it is possible to dispose only one junction box or more than two junction boxes within a solar panel module. Although the junction boxes are disposed at the backsides of the solar panels, it is possible to dispose one, multiple, or all of the junction boxes at sidewalls or front sides of the solar panels. Although connecting ribbons between different solar panel modules are drawn as multiple solid lines in FIG. 4, a person skilled in the art should understand each solid line may represent two or more male-ended and/or female-ended connecting lines.

Not like traditional solar panel apparatus using huge amount of bypass diodes to increase reliability of the apparatus, the integrated apparatus with multiple solar panel modules of the present invention uses only single one bypass diode to achieve similar reliability and save cost for manufacturing and assembling.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. An integrated apparatus (5000) with multiple solar panel modules (1001, 1002, 100n) comprising:
a plurality of solar panel modules (1001, 1002, 100n) electrically connected with each other, each of the plurality of solar panel modules (1001, 1002, 100n) having at least one solar panel (100), the at least one solar panel (100) having a plurality of solar cell units (10, 10a, 10b) electrically connected with each other,
wherein there is only single one bypass diode (BD) provided in the integrated apparatus (5000).

2. The integrated apparatus of claim 1, wherein the plurality of solar cell units (10, 10a, 10b) are electrically connected in serial.

3. The integrated apparatus of claim 2, wherein each of the plurality of solar panel modules (1001, 1002, 100n) comprises a plurality of solar panels (100, 100') and the plurality of solar panels (100, 100') are electrically connected in parallel.

4. The integrated apparatus of claim 3, wherein the plurality of solar panel modules (1001, 1002, 100n) are electrically connected in serial.

5. The integrated apparatus of claim 3, wherein the plurality of solar panel modules (1001, 1002, 100n) are electrically connected in parallel.

6. The integrated apparatus of claim 4 or 5, wherein the plurality of solar panel modules (1001, 1002, 100n) comprises a first solar panel module (1001) and rest of the solar panel modules (1002, 100n), wherein there are no bypass diodes provided in the rest of the solar panel modules (1002, 100n).

7. The integrated apparatus of claim 6, wherein the first solar panel module (1001) comprises two junction boxes (1511, 1512) and the only single one bypass diode (BD) is provided in one junction box (1511) of the two junction boxes (1511, 1512).

8. The integrated apparatus of claim 7, wherein the one junction box (1511) accommodating the only single one bypass diode (BD) is provided on a front side configured to subject to sun light of the first solar panel module (1001).

9. The integrated apparatus of claim 7, wherein the one junction box (1511) is provided on a backside configured to be away from sun light of the first solar panel module (1011).

10. The integrated apparatus of claim 6, wherein each solar panel module of the plurality of solar panel modules (1001, 1002, 100n) comprises three solar panels (100, 100', 100).
